Europäisches Patentamt

(19) European Patent Office    (11) Publication number:    **0 104 705**
Office européen des brevets    **B1**

(12)    **EUROPEAN PATENT SPECIFICATION**

(45) Date of publication of patent specification: **19.03.86**    (51) Int. Cl.⁴: **C 05 G 1/00, C 05 D 1/00,**
    **C 05 C 1/02 .**

(21) Application number: **83201357.7**

(22) Date of filing: **23.09.83**

(54) Process for preparing granular compound fertilizers having a high potassium content.

(30) Priority: **25.09.82 NL 8203723**

(43) Date of publication of application:
**04.04.84 Bulletin 84/14**

(45) Publication of the grant of the patent:
**19.03.86 Bulletin 86/12**

(84) Designated Contracting States:
**AT BE DE FR GB IT NL SE**

(56) References cited:
**EP-A-0 007 132**
**FR-A-1 350 984**
**GB-A-1 109 410**
**NL-A-6 605 153**

(73) Proprietor: **UNIE VAN KUNSTMESTFABRIEKEN B.V.**
**Maliebaan 81**
**NL-3581 CG Utrecht (NL)**

(72) Inventor: **Watson, Ian Kendall**
**49 The Rock Helsby**
**via Washington Cheshire WA6 9AS (GB)**
Inventor: **Bohte, Hermanus Johannes**
**Amatist 59**
**NL-1703 AR Heerhugowaard (NL)**

(74) Representative: **Roeffen, Wilhelmus Johannes Maria et al**
**OCTROOIBUREAU DSM Postbus 9**
**NL-6160 MA Geleen (NL)**

Courier Press, Leamington Spa, England.

EP 0 104 705 B1

## Description

The invention relates to a process for preparing granular compound fertilizers, in which process solid potassium chloride is mixed with an ammonium nitrate solution or melt, and the mixture is subsequently granulated, optionally together with other substances.

Such a process is known and is applied in the fertilizer industry on a large scale.

A problem occurring in the preparation of such fertilizers is that the potassium chloride and the ammonium nitrate react with each other while forming ammonium chloride and potassium nitrate. This reaction not only occurs during the mixing and granulation, but also in the granules already formed. During storage the crystal changes occurring in the granules in consequence of this after-reaction cause a number of undesired phenomena, such as a decrease in crushing strength, surface cracking, efflorescence of salts on the surface, resulting in the formation of dust and in an increase of fine particles and caking of individual granules.

It is possible in principle to suppress the reaction between the ammonium nitrate and potassium chloride wholly or largely by applying a non-reactive potassium chloride and/or a starting mixture having an extremely low water content. This method, however, is hardly attractive on account of the high cost of this non-reactive potassium chloride, for instance coated in a special manner, and the undesirable side effects this coating has on the granulation process.

Further the preparation of a practically anhydrous mixture, also, involves relatively high costs.

Another method frequently used to wholly of largely obviate the problem of crystal changes in the granules during storage is to take care that during the granule preparation step a virtually 100% conversion takes place either of potassium chloride, if an excess of ammonium nitrate is present, or of ammonium nitrate, if an excess of potassium chloride has been used. This can be achieved, for instance, by increasing the reaction time of the starting components, particularly by premixing the ammonium nitrate and potassium chloride in a separate mixing device before supplying them to the granulator. Such a process is described, for instance, in Paper TA/80/12 presented at the ISMA Conference in Vienna (11th—13th November 1980).

Although this last-mentioned process generally produces ammonium nitrate- and potassium chloride-based granular compound fertilizers showing stability in storage, this process cannot be used for the preparation of compound fertilizers in which a molar excess of potassium chloride in respect of ammonium nitrate is present. The fact is that this process has been found to produce· so viscous a mixture in the premixing device that it can no longer be granulated.

Another possibility of achieving a virtually full conversion during the granule preparation step consists in either using a finely ground potassium chloride, as described in the European patent specification 7.132, or in using a preheated potassium chloride, as described in the United Kingdom patent specification 1.109.410. A disadvantage of these processes is that, on account of the high energy consumption required for this purpose both the grinding and the preheating of potassium chloride involve relatively high costs. Moreover, it has been found that in applying these processes for the preparation of fertilizers having a very high potassium chloride content problems will arise also as a result of the high viscosity of the mixtures to be granulated.

The invention now provides a process for preparing granular compound fertilizers showing stability in storage and containing potassuim chloride in a molar excess in respect of ammonium nitrate by ˙mixing solid potassium chloride˙ in a mixing zone with an ammonium nitrate solution or melt and subsequently granulating the mixture formed in a granulating zone, optionally while adding other substances, in which process said disadvantages are wholly or substantially eliminated.

This is achieved according to the invention in that technical-grade potassium chloride is used and only part hereof is added to the mixing zone and the balance is supplied to the granulating ˙ zone. Preference is given to adding such a quantity of potassium chloride to the mixing zone that the mixture formed has an $NH_4NO_3$:KCl molar ratio $\leqslant$1.2:1 and $\geqslant$1.0:1 and .specifically about 1:1.

In the present process technical-grade potassium chloride is used. It has been found that the use of chemically pure potassium chloride is less attractive, because this will result in a mixture having increased viscosity. Technical-grade KCl, which contains, for instance, small quantities of NaCl and/or $MgCl_2$, or which has been treated with a small quantity of an organic coating agent, can be used per se. Particularly suitable is KCl of a normal commercial quality with an average particle size up to 250 μm.

In the present invention the potassium chloride can in principle be added to the mixing zone preheated. Preference, however, is given to using unpreheated potassium chloride, so that the relatively high costs of this preheating are avoided.

The temperature in the mixing zone may vary and is generally determined by the temperature of the KCl and $NH_4NO_3$ supplied. As indicated earlier, the KCl can be supplied at ambient temperature, as well as preheated, for instance to 80°C. Preference is given to supplying the $NH_4NO_3$ direct as solution or melt from an $NH_4NO_3$ plant at a temperature of between about 140 and 180°C, so that the resulting temperature in the mixing zone is between 110 and 150°C. It has been found that, in order to obtain a stable finished product, it may be important for potassium nitrate crystals to crystallize in the slurry in the mixing zone. This can be achieved by cooling this mixing zone, if necessary, for instance to 120°C.

As mixing zone various apparatuses known as such can be used, for instance one or more stirred reactors, or one or more static jet mixers, or one or more mixing vessels equipped with rotors provided with blades.

The mixture formed in the mixing zone is subsequently supplied to a granulating zone, to which the balance of the potassium chloride and optionally other fertilizer components, for instance ammonium phosphate, and/or other substances, are supplied as well. The potassium chloride can be fed to the granulating zone at any place. Preference, however, is given to mixing the potassium chloride with the solid material returned from the screening and crushing section and feeding the mixture formed to the granulating zone. If ammonium phosphate is supplied to the granulating zone as well, it will be an advantage to feed this ammonium phosphate behind the potassium chloride feeding place and before the feeding place of the liquid mixture from the mixing zone, as seen in the direction of flow of the mixture to be granulated, because it has been found that this will produce granules having greater stability. As granulating zone various granulators known as such can be used, particularly agglomeration-granulation devices, such as a blunger or pugmill, drum or pan.

The product from this granulating zone is then treated further in a manner known as such, for instance dried, screened, cooled and optionally coated with an anticaking agent.

The invention is further elucidated in the following examples without, however, being limited thereby.

Example

To a mixing vessel equipped with two rotors provided with blades 66 kg/hour solid potassium chloride and 67 kg/hour of a 95%-(wt) ammonium nitrate solution were supplied continuously ($NH_4NO_3$:KCl molar ratio about 1:1). The potassium chloride used was a technical-grade product having an average particle size of about 240 μm. The temperature of the potassium chloride and of the ammonium nitrate supplied was about 22°C and 160°C respectively. The temperature in the mixing vessel was about 120°C and the residence time of the reactants in this zone about 20 seconds.

The slightly viscous liquid mixture formed in the mixing vessel was subsequently passed to a twin shafted blunger. To this blunger 1150 kg/hour solid material (temperature 65—70°C) was supplied continuously. This solid material was composed of 99 kg technical-grade potassium chloride and 1051 kg solid recycle material (see below). Further down a quantity of 61 kg/hour ammonium phosphate slurry (N:P ratio about 1.0) from a pipe reactor was metered to the blunger. The liquid mixture formed in the mixing vessel was fed to the blunger behind the feeding place of the ammonium phosphate. The average residence time of the components in the blunger was about 20 seconds.

The granules formed were transported away (exit temperature about 90°C), dried to a moisture content of about 0.6% (wt) and screened into a fraction smaller than 2 mm, a product fraction of 2—4 mm, and a fraction larger than 4 mm, which last-mentioned fraction was crushed. The fraction smaller than 2 mm and the crushed fraction were returned to the blunger as solid recycle material.

The product granules were stored in bulk in a shed and showed no caking even after three months' storage. The granules were not plastic and no temperature rise occurred in the stored granules. The product (N, $P_2O_5$, $K_2O$ content 11—11—33) could be conveyed and stored without powdering.

Comparative Example

The process described above was repeated on the basis that the total quantity of potassium chloride (165 kg/hour) was supplied to the mixing vessel. The mixture formed was so thick and viscous that it could no longer be processed to form granules.

**Claims**

1. Process for preparing granular compound fertilizers containing ammonium nitrate and potassium chloride, in which fertilizers potassium chloride is present in a molar excess in respect of ammonium nitrate, by mixing solid potassium chloride in a mixing zone with an ammonium nitrate solution or melt and subsequently granulating the mixture in a granulating zone, optionally while adding other substances, characterized in that technical-grade potassium chloride is used and only part hereof is added to the mixing zone and the balance is supplied to the granulating zone.

2. Process according to claim 1, characterized in that a technical-grade potassium chloride is used having an average particle size up to 250 μm.

3. Process according to claim 1 or 2, characterized in that the potassium chloride is added unpreheated.

4. Process according to any one of claims 1—3, characterized in that the quantity of potassium chloride added to the mixing zone is such that the $NH_4NO_3$:KCl molar ratio of the mixture formed is ⩽1.2:1 and ⩾1.0:1.

5. Process according to any one of claims 1—4, characterized in that the portion of the potassium chloride to be added to the granulating zone is mixed with the crushed, too coarse, fraction of the granulate from the granulating zone, and this mixture is supplied to the granulating zone.

6. Process according to any one of claims 1—5, in which process ammonium phosphate, too, is supplied to the granulating zone, characterized in that the ammonium phosphate is supplied behind the potassium chloride feeding place and before the feeding place of the liquid mixture from the mixing zone, as seen in the direction of flow of the mixture to be granulated.

## Patentansprüche

1. Verfahren zum Bereiten von granulierten, Ammoniumnitrat und Kaliumchlorid enthaltenden Düngermischungen, in welchen Kaliumchlorid in einem molaren Überschuß bezüglich Ammoniumnitrat vorliegt, durch Vermischen von festem Kaliumchlorid in einer Mischzone mit einer Ammoniumnitratlösung oder -schmelze und anschließendes Granulieren des Gemisches in einer Granulierzone, gegebenenfalls unter Zusatz anderer Substanzen, dadurch gekennzeichnet, daß technisch reines Kaliumchlorid verwendet wird und nur ein Teil davon der Mischzone zugesetzt und der Rest der Granulierzone zugeführt wird.

2. Verfahren nach Anspruch 1, dadurch gekennzeichnet, daß ein technisch reines Kaliumchlorid mit einer durchschnittlichen Teilchengröße bis 250 µm verwendet wird.

3. Verfahren nach Anspruch 1 oder 2, dadurch gekennzeichnet, daß das Kaliumchlorid unvorerhitzt zugesetzt wird.

4. Verfahren nach einem der Ansprüche 1—3, dadurch gekennzeichnet, daß der Mischzone eine solche Menge Kaliumchlorid zugesetzt wird, daß das molare Verhältnis $NH_4NO_3$:KCl in dem gebildeten Gemisch ≤1,2:1 und ≥1,0:1 ist.

5. Verfahren nach einem der Ansprüche 1—4, dadurch gekennzeichnet, daß der der Granulierzone zuzusetzende Anteil des Kaliumchlorids mit der zerkleinerten, zu groben Fraktion des Granulats aus der Granulierzone vermischt wird und dieses Gemisch der Granulierzone zugeführt wird.

6. Verfahren nach einem der Ansprüche 1—5, bei welchem Verfahren der Granulierzone auch Ammoniumphosphat zugeführt wird, dadurch gekennzeichnet, daß das Ammoniumphosphat hinter der Beschickungsstelle des Kaliumchlorids und vor der Beschickungsstelle des flüssigen Gemisches aus der Mischzone der Granulierzone, gesehen in Fließrichtung des zu granulierenden Gemisches, zugeführt wird.

## Revendications

1. Procédé de préparation d'engrais granulaires combinés contenant du nitrate d'ammonium et du chlorure de potassium, dans lesquels le chlorure de potassium est présent en un excès molaire par rapport au nitrate d'ammonium, consistant à mélanger du chlorure de potassium solide dans une zone de mélange avec une solution ou masse fondue de nitrate d'ammonium et ensuite à granuler le mélange dans une zone de granulation, facultativement pendant qu'on ajoute d'autres substances, caractérisé en ce qu'on utilise du chlorure de potassium de qualité technique et qu'on ne fournit qu'une partie de celui-ci à la zone de mélange alors qu'on admet le complément dans la zone de granulation.

2. Procédé selon la revendication 1, caractérisé en ce que le chlorure de potassium de qualité technique qu'on utilise a une granulométrie allant jusqu'à 250 µm.

3. Procédé selon la revendication 1 ou 2, caractérisé en ce qu'on ajoute le chlorure de potassium sans le préchauffer.

4. Procédé selon l'une quelconque des revendications 1 à 3, caractérisé en ce que la quantité de chlorure de potassium qu'on admet dans la zone de mélange est telle que le rapport molaire $NH_4NO_3$/KCl dans le mélange formé est inférieur à 1,2:1 et supérieur à 1,0:1.

5. Procédé selon l'une quelconque des revendications 1 à 4, caractérisé en ce que la portion de chlorure de potassium à ajouter à la zone de granulation est mélangée avec la fraction broyée trop grossière du granulé provenant de la zone de granulation et on fournit ce mélange à la zone de granulation.

6. Procédé selon l'une quelconque des revendications 1 à 5, dans lequel on fournit également du phosphate d'ammonium à la zone de granulation, caractérisé en ce qu'on admet le phosphate d'ammonium en aval de l'emplacement d'admission du chlorure de potassium et en amont du point de sortie du mélange liquide de la zone de mélange, en observant le sens d'écoulement du mélange à granuler.